# EUROPÄISCHE PATENTSCHRIFT

(11) **EP 3 271 989 B1**
(45) Veröffentlichungstag und Bekanntmachung des Hinweises auf die Patenterteilung: **21.12.2022**
(21) Anmeldenummer: 16702478.5
(22) Anmeldetag: 14.01.2016
(51) Int. Cl.: H02J 3/38, H02M 7/23

(54) **ANLAGE ZUR VERSORGUNG MINDESTENS EINES ELEKTRISCHEN VERBRAUCHERS BZW. EINES ENERGIESPEICHERS MIT GLEICHSTROM**
SYSTEM FOR SUPPLYING AT LEAST ONE ELECTRICAL LOAD OR ENERGY STORE WITH DIRECT CURRENT
INSTALLATION POUR ALIMENTER AU MOINS UN CONSOMMATEUR ÉLECTRIQUE OU AU MOINS UN ACCUMULATEUR D'ÉNERGIE EN COURANT CONTINU

(30) Priorität: 19.03.2015 AT 1582015
(43) Veröffentlichungstag der Anmeldung: 24.01.2018
(73) Patentinhaber: Innova Patent GmbH, 6922 Wolfurt (AT)
(72) Erfinder: LUGER, Peter, 6850 Dornbirn (AT)
(74) Vertreter: Beer & Partner Patentanwälte KG
(86) Internationale Anmeldenummer: PCT/AT2016/000002
(87) Internationale Veröffentlichungsnummer: WO 2016/145463

(56) Entgegenhaltungen:
- EP-A1- 1 992 539
- EP-A2- 2 385 602
- AT-A1- 510 677
- DE-A1-102011 014 536

## Beschreibung

Die gegenständliche Erfindung betrifft eine Anlage zur Versorgung mindestens eines elektrischen Verbrauchers bzw. eines Energiespeichers mit Gleichstrom mittels einer Mehrzahl von bei Rollen, insbesondere Laufrollen bzw. Tragrollen, einer Seilbahnanlage befindlichen elektrischen Generatoren.

Es ist bekannt, bei Seilbahnanlagen eine Laufrolle eines Seilbahnfahrzeuges bzw. eine Tragrolle für ein Förderseil oder für ein Zugseil mit einem elektrischen Generator auszubilden. Es wird hierzu auf die EP-1992539 B1, die EP-2623389 A1 und die WO 2008/12019 A1 verwiesen.

Hierdurch kann durch die Bewegung eines Seilbahnfahrzeuges längs eines Tragseiles der Seilbahnanlage mittels dieser Laufrolle die im Fahrzeug erforderliche elektrische Energie erzeugt werden, durch welche z.B. eine Heizung betrieben wird. Insoweit als auf Stützen von Seilbahnanlagen befindliche Tragrollen bzw. Niederhalterollen betroffen sind, kann hierdurch die für auf den Stützen befindliche elektrische bzw. elektronische Geräte erforderliche elektrische Energie erzeugt werden. Hierdurch besteht kein Erfordernis, zu den Stützen elektrische Leitungen zu verlegen.

In der Regel wird die von einem derartigen Generator erzeugte elektrische Energie in eine Batterie eingespeist, von welcher elektrische bzw. elektronische Geräte mit dem erforderlichen Strom versorgt werden. Für die Speisung der Batterie wird der vom Generator erzeugte Wechselstrom mittels eines Gleichrichters in Gleichstrom umgewandelt. In der Folge wird die Spannung dieses Gleichstroms mittels eines Spannungsumsetzers auf eine vorgegebene konstante Spannung gebracht, mit welcher die Batterie gespeist wird. Die Versorgung der elektrischen bzw. elektronischen Geräte mit Strom kann auch direkt vom Spannungsumsetzer her erfolgen.

Eine Stromversorgungseinrichtung mit wenigstens drei Generatoren zur Versorgung eines gemeinsamen Verbraucherkreises ist bereits aus AT 510 677 A1 bekannt.

Die Laufrollen von Fahrwerken von Seilbahnfahrzeugen bzw. die auf Stützen befindlichen Tragrollen und Niederhalterollen, über welche Förderseile bzw. Zugseile von Seilbahnanlagen geführt sind, weisen aus fertigungstechnischen Gründen bzw. aufgrund von Abnützungen unterschiedliche Durchmesser und aufgrund von unterschiedlichen Laufeigenschaften unterschiedliche Drehgeschwindigkeiten auf, wodurch an den Ausgängen von in diesen vorgesehenen bzw. mit diesen auf Mitnahme gekuppelten elektrischen Generatoren hinsichtlich der Frequenz und der Spannung unterschiedliche elektrische Werte auftreten. Sofern die von diesen Generatoren erzeugte elektrische Energie an einen diesen zugeordneten elektrischen Verbraucher oder an eine Batterie abgegeben wird, besteht deshalb das Erfordernis, hierfür eine Steuerschaltung vorzusehen, durch welche gewährleistet wird, dass der elektrische Verbraucher bzw. die Batterie von den Generatoren her mit Strom versorgt wird, welcher eine vorgegebene Spannung aufweist.

Erfindungsgemäß besteht diese Steuerschaltung darin, dass der Ausgang jedes der Generatoren an jeweils einen AC/DC-Wandler geführt ist, dass ein Ausgang jedes der AC/DC Wandler über eine gemeinsame bidirektionale Steuerleitung an eine gemeinsame Steuereinheit gelegt ist, wobei sämtliche AC/DC-Wandler mittels einer gemeinsamen Steuereinheit dahingehend gesteuert bzw. geregelt werden, dass an ihren Ausgängen zumindest angenähert gleiche konstante Spannungen auftreten, und wobei die Ausgänge sämtlicher AC/DC-Wandler miteinander verbunden und an mindestens einen Verbraucher bzw. an einen Energiespeicher gelegt sind.

Vorzugsweise enthält jeder der AC/DC-Wandler einen Gleichrichter, dessen Ausgang an einen DC/DC-Spannungsumsetzer gelegt ist. Erfindungsgemäß ist ein Ausgang jedes der AC/DC-Wandler über eine gemeinsame bidirektionale Steuerleitung an die Steuereinheit gelegt. Zudem kann ein Ausgang der Steuereinheit über eine Mess- bzw. Ausgangsleitung an die AC/DC-Wandler gelegt sein.

Vorzugsweise ist die Steuereinheit mit einer Eingabe- bzw. Ausgabeleitung ausgebildet. Weiters kann an den Ausgang der Generatoren ein Frequenzmesswertgeber angelegt sein. Zudem kann an den Ausgang der DC/DC-Spannungsumsetzer jeweils ein Strommesswertgeber und ein Spannungsmesswertgeber angelegt sein. Weiters kann an die Generatoren jeweils ein Temperatursensor angeschlossen sein. Vorzugsweise sind die Ausgänge der Spannungs- und Frequenzmesswertgeber, der Strommesswertgeber, der Spannungsmesswertgeber und der Temperatursensoren an eine Steuerschaltung angelegt und ist ein Ausgang der Steuerschaltung an den Spannungsumsetzer gelegt.

Der Gegenstand der Erfindung ist nachstehend anhand eines in der Zeichnung dargestellten Ausführungsbeispiels näher erläutert. Es zeigen:
- FIG.1: ein Fahrzeug in einer Seilbahnanlage, in Seitenansicht,
- FIG.2: eine Schaltanordnung mit AC/DC-Wandlern zur Speisung eines Verbrauchers mittels einer Vielzahl von bei Laufrollen befindlichen Generatoren,
- FIG.3: eine Schaltungsanordnung zur Steuerung der Spannung des von den einzelnen Generatoren erzeugten elektrischen Stromes,
- FIG.4: eine Baueinheit mit mehreren AC/DC-Wandlern, in Draufsicht, und
- FIG.4A: die Ansicht nach dem Schnitt gemäß der Linie IV-IV der FIG.4.

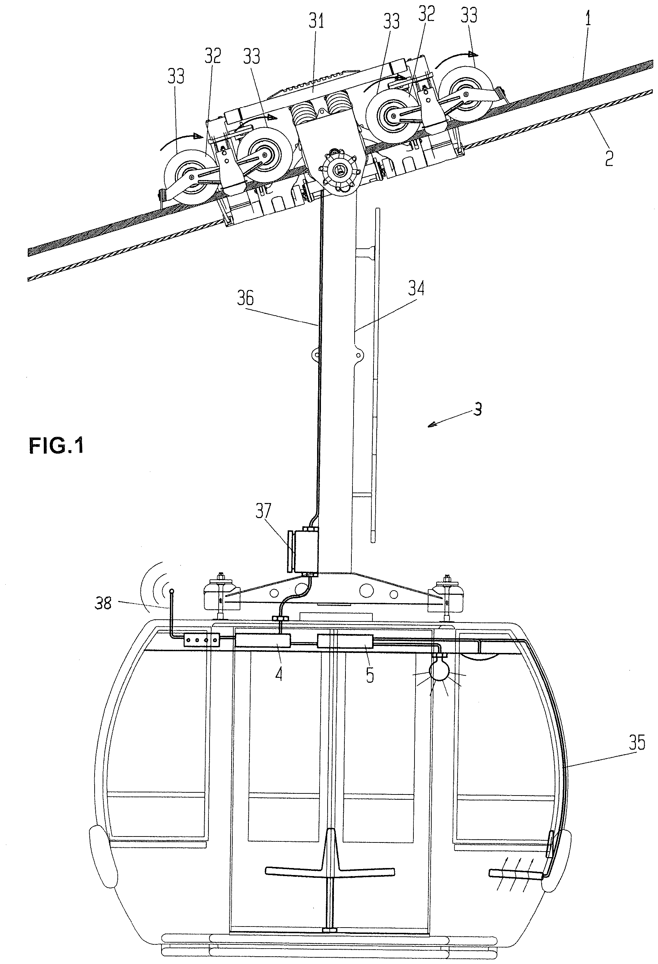

FIG.1 zeigt einen Abschnitt einer Seilbahnanlage mit einem Tragseil 1, auf welchem mittels eines Zugseiles 2 ein Fahrzeug 3 verfahren wird. Das Fahrzeug 3 ist mit einem Fahrwerk 31 ausgebildet, auf welchem sich zwei Schwingen 32 befinden, an welchen acht Laufrollen 33 gelagert sind. Das Fahrwerk 31 wird mittels des Zugseiles 2 bewegt, wobei die Laufrollen 33 am Tragseil 1 abrollen. An das Fahrwerk 31 ist eine Tragstange 34 angelenkt, an deren unterem Ende sich eine Seilbahnkabine 35 befindet.

Einige oder sämtliche Laufrollen 33 sind mit elektrischen Generatoren ausgebildet, durch welche durch die Bewegung des Fahrwerks 31 längs des Tragseiles 1 elektrischer Strom erzeugt wird. Die Spannung und die Frequenz des hierdurch von den einzelnen Generatoren erzeugten elektrischen Stroms hängen von der Auslegung der Generatoren und von den Drehgeschwindigkeiten der Laufrollen 33 ab. Die Außendurchmesser der Laufrollen 33 können aufgrund von Herstellungstoleranzen und aufgrund von unterschiedlichen Abnutzungen unterschiedlich groß sein.

Aufgrund von unterschiedlichen Außendurchmessern, durch welche unterschiedliche Drehgeschwindigkeiten auftreten und aufgrund von unterschiedlichen Laufeigenschaften der Laufrollen 33 wird somit von den elektrischen Generatoren Strom mit unterschiedlichen Spannungen und unterschiedlichen Frequenzen erzeugt.

An die in den Laufrollen 33 befindlichen Generatoren sind Leitungen 36 angeschlossen, welche längs der Tragstange 34 zu einem Verteilerkasten 37 geführt sind. Die Ausgänge des Verteilerkastens 37 sind an eine in der Seilbahnkabine 35 befindliche AC/DC-Wandlerschaltung 4 gelegt, in welcher der von den einzelnen Generatoren erzeugte Strom gleichgerichtet und auf eine vorgegebene Spannung umgesetzt wird. Der Ausgang der AC/DC-Wandlerschaltung 4 ist in eine Verteilerschaltung 5 gelegt, durch welche die Versorgung der in der Seilbahnkabine 35 befindlichen elektrischen Verbraucher, wie eine Beleuchtungsanlage, eine Tonanlage, Bildschirme, Heizgeräte und Geräte der Telekommunikation bzw. einer Batterie, mit elektrischer Energie gesteuert wird. Die Seilbahnkabine 35 ist weiters mit einer Sende- bzw. Empfangsantenne 38 ausgebildet.

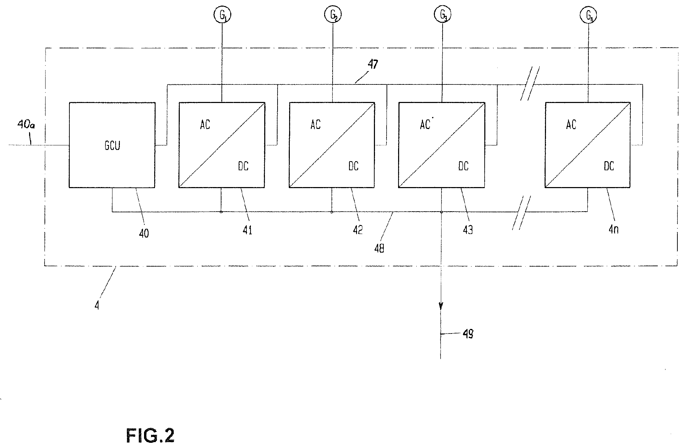

Wie dies nachstehend anhand der FIG.2 erläutert ist, enthält die AC/DC-Wandlerschaltung 4 eine Mehrzahl von AC/DC-Wandlern 41, 42, 43 ... 4n, an welche die Ausgänge der an bzw. in den Laufrollen 33 befindlichen Generatoren G1, G2, G3...Gn geführt sind. Die AC/DC-Wandler 41, 42, 43 ... 4n sind mit jeweils zwei Ausgängen ausgebildet, welche über eine gemeinsame bidirektionale Steuerleitung 47 und über eine gemeinsame Messleitung 48 an eine Steuereinheit 40 gelegt sind, durch welche die AC/DC-Wandler 41, 42, 43 ... 4n dahingehend gesteuert bzw. geregelt werden, dass der von den einzelnen AC/DC-Wandlern 41, 42, 43 ... 4n abgegebene elektrische Gleichstrom die gleiche vorgegebene Spannung aufweist. Die Steuereinrichtung 40 ist mit einer Eingabe- bzw. Ausgabeleitung 40a ausgebildet. Der von der AC/DC-Wandlerschaltung 4 über die Messleitung 48 an eine Ausgangsleitung 49 abgegebene Strom wird an die elektrischen Verbraucher bzw. an eine Batterie geführt.

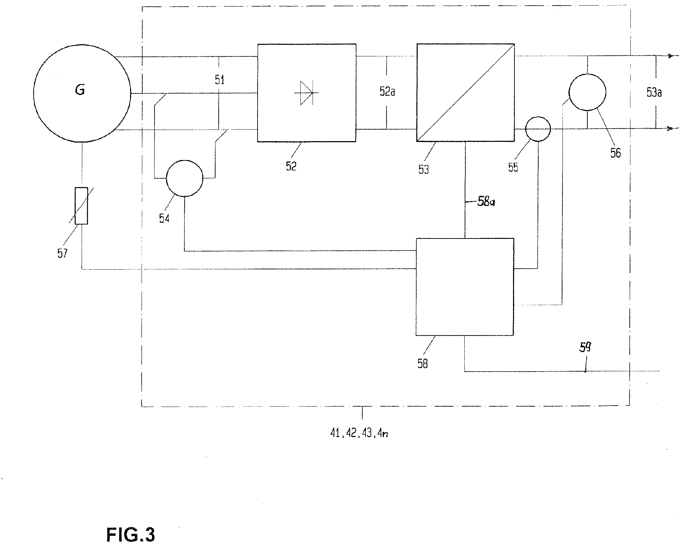

Nachstehend ist anhand der FIG.3 die Ausbildung der AC/DC-Wandler 41, 42, 43 ... 4n erläutert:
Die drei Phasen des von einem der Generatoren G erzeugten Stromes werden über eine Leitung 51 an einen Gleichrichter 52 gelegt, durch welchen der vom Generator G abgegebene Wechselstrom in einen gewellten Gleichstrom umgewandelt wird. Der vom Gleichrichter 52 abgegebene Gleichstrom wird über eine Leitung 52a an einen DC/DC-Spannungsumsetzer 53 abgegeben, in welchem die Spannung dieses Gleichstroms auf einen konstanten vorgegebenen Wert umgesetzt wird. Der vom DC/DC-Spannungsumsetzer 53 abgegebene Gleichstrom wird über die Ausgangsleitung 53a den Verbrauchern zugeführt.

An die Ausgangsleitung 51 des Generators G ist ein Spannungs- und Frequenzmesswertgeber 54 angeschlossen, durch welchen die Spannung und die Frequenz des vom Generator G abgegebenen Stromes ermittelt werden. An die Ausgangsleitung 53a sind ein Strommesswertgeber 55 und ein Spannungsmesswertgeber 56 angeschlossen. Weiters ist der Statorwicklung des Generators G ein Temperatursensor 57 zugeordnet.

Zudem ist eine Steuerschaltung 58 vorgesehen, an welche die Ausgänge des Spannungs- und Frequenzmesswertgebers 54, des Strommesswertgebers 55, des Spannungsmesswertgebers 56 und des Temperatursensors 57 angelegt sind. Durch diese Steuerschaltung 58 wird der über eine Steuerleitung 58a angeschlossene DC/DC-Spannungsumsetzer 53 dahingehend überwacht bzw. gesteuert, dass der über die Ausgangsleitung 53a abgegebene Strom die vorgegebene konstante Spannung aufweist. Die Ausgangsleitungen 53a sind an die aus FIG.2 ersichtliche Ausgangsleitung 49 angeschlossen. Die Steuerschaltung 58 ist mit einer weiteren Leitung 59 ausgebildet, welche an die in FIG.2 dargestellte bidirektionale Steuerleitung 47 anschließt.

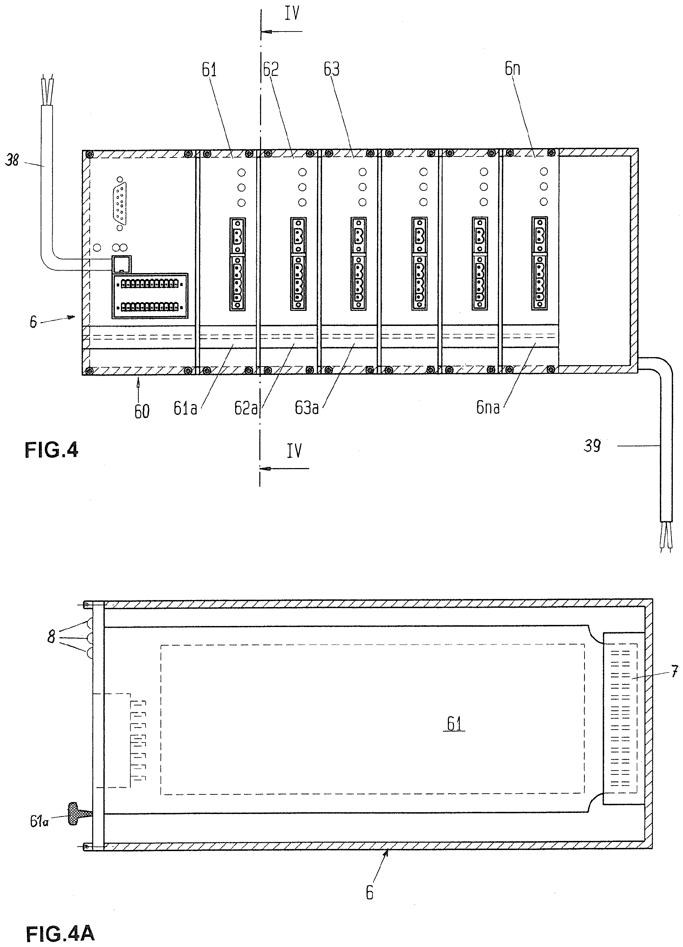

Wie dies in den FIG.4 und FIG.4A dargestellt ist, ist die AC/DC-Wandlerschaltung 4 als Baueinheit 6 ausgebildet, welche einen Rahmen 60 aufweist, in welchen Module 61, 62, 63 ... 6n eingesetzt sind, auf welchem sich die AC/DC-Wandler 41, 42, 43 ... 4n befinden. Die Module 61, 62, 63 ... 6n sind mit Griffleisten 61a, 62a, 63a ... 6n ausgebildet. Der Anschluss der Baueinheit 6 an die Verteilerschaltung 5 erfolgt mittels einer mehrpoligen Leitung 39, über welche der gleichgerichtete und die vorgegebene konstante Spannung aufweisende Strom an die Verbraucher bzw. an mindestens einen Energiespeicher abgegeben wird.

Die Baueinheit 6 ist weiters mit Kontaktleisten 7 ausgebildet, welche den Modulen 61, 62, 63 ... 6n zugeordnet sind. Zudem ist die Baueinheit 6 mit LED-Leuchten 8 versehen. Weiters ist die Baueinheit 6 mit der Sende- bzw. Empfangsantenne 38 ausgebildet.

## Patentansprüche

1. Anlage zur Versorgung mindestens eines elektrischen Verbrauchers bzw. eines Energiespeichers mit Gleichstrom mittels einer Mehrzahl von bei Rollen, insbesondere Laufrollen (33) bzw. Tragrollen, einer Seilbahnanlage befindlichen elektrischen Generatoren, **dadurch gekennzeichnet, dass** der Ausgang jedes der Generatoren (G, G1, G2, G3 ... Gn) an jeweils einen AC/DC-Wandler (41, 42, 43 ... 4n) geführt ist, dass ein Ausgang jedes AC/DC-Wandlers (41, 42, 43 ... 4n) über eine gemeinsame bidirektionale Steuerleitung (47) an eine gemeinsame Steuereinheit (40) gelegt ist, wobei sämtliche AC/DC-Wandler (41, 42, 43 ... 4n) mittels der gemeinsamen Steuereinheit (40) dahingehend gesteuert bzw. geregelt werden, dass an ihren Ausgängen zumindest angenähert gleiche konstante Spannungen auftreten, und wobei die Ausgänge sämtlicher AC/DC-Wandler (41, 42, 43 ... 4n) miteinander verbunden und an mindestens einen Verbraucher bzw. an einen Energiespeicher gelegt sind.

2. Anlage nach Anspruch 1, **dadurch gekennzeichnet, dass** jeder der AC/DC-Wandler (41, 42, 43 ... 4n) einen Gleichrichter (52) enthält, dessen Ausgang an einen DC/DC-Spannungsumsetzer (53) gelegt ist.

3. Anlage nach Anspruch 1 oder 2, **dadurch gekennzeichnet, dass** ein Ausgang jedes AC/DC-Wandlers (41, 42, 43 ... 4n) über eine Messleitung (48) an die Steuereinheit (40) gelegt ist.

4. Anlage nach einem der Ansprüche 1 bis 3, **dadurch gekennzeichnet, dass** die Steuereinheit (40) mit einer Eingabe- bzw. Ausgabeleitung (40a) ausgebildet ist.

5. Anlage nach einem der Ansprüche 1 bis 4, **dadurch gekennzeichnet, dass** an den Ausgang der Generatoren (G) ein Spannungs- und Frequenzmesswertgeber (54) angelegt ist.

6. Anlage nach Anspruch 2 und gegebenenfalls einem der Ansprüche 3 bis 5, **dadurch gekennzeichnet, dass** an den Ausgang der DC/DC-Spannungsumsetzer (53) jeweils ein Strommesswertgeber (55) und ein Spannungsmesswertgeber (56) angelegt sind.

7. Anlage nach einem der Ansprüche 1 bis 6, **dadurch gekennzeichnet, dass** an die Generatoren (G, G1, G2, G3 ... Gn) jeweils ein Temperatursensor (57) angeschlossen ist.

8. Anlage nach den Ansprüchen 5 bis 7, **dadurch gekennzeichnet, dass** die Ausgänge der Spannungs- und Frequenzmesswertgeber (54), der Strommesswertgeber (55), der Spannungsmesswertgeber (56) und der Temperatursensoren (57) an eine Steuerschaltung (58) angelegt sind.

9. Anlage nach Anspruch 8, **dadurch gekennzeichnet, dass** ein Ausgang der Steuerschaltung (58) an den Spannungsumsetzer (53) gelegt ist.

## Claims

1. Installation for supplying at least one electrical load or energy store with direct current by means of a plurality of electrical generators located at rollers, in particular track rollers (33) or support rollers, of a cableway system, **characterized in that** the output of each of the generators (G, G1, G2, G3 ... Gn) is routed to a respective AC/DC converter (41, 42, 43 ... 4n), **in that** an output of each AC/DC converter (41, 42, 43 ... 4n) is connected via a common bidirectional control line (41, 42, 43 ... 4n). 4n) to a common control unit (40), wherein all AC/DC converters (41, 42, 43 ... 4n) are controlled or regulated by means of the common control unit (40) to the effect that at least approximately identical constant voltages arise at their outputs, and wherein the outputs of all AC/DC converters (41, 42, 43 ... 4n) are connected to one another and are connected to at least one load or energy store.

2. Installation according to claim 1, **characterized in that** each of the AC/DC converters (41, 42, 43 ... 4n) contains a rectifier (52), the output of which is connected to a DC/DC voltage converter (53).

3. Installation according to claim 1 or 2, **characterized in that** an output of each AC/DC converter (41, 42, 43 ... 4n) is connected to the control unit (40) via a measuring line (48).

4. Installation according to one of claims 1 to 3, **characterized in that** the control unit (40) is designed with an input/output line (40a).

5. Installation according to one of claims 1 to 4, **characterized in that** a voltage and frequency transducer (54) is connected to the output of the generators (G).

6. Installation according to claim 2 and if applicable to one of claims 3 to 5, **characterized in that** to each output of the DC/DC voltage converters (53) a current transducer (55) and a voltage transducer (56) are connected.

7. Installation according to one of claims 1 to 6, **characterized in that** to each of the generators (G, G1, G2, G3 ... Gn) a temperature sensor (57) is connected.

8. Installation according to claims 5 to 7, **characterized in that** the outputs of the voltage and frequency transducers (54), of the current transducers (55), of the voltage transducers (56) and of the temperature sensors (57) are connected to a control circuit (58).

9. Installation according to claim 8, **characterized in that** an output of the control circuit (58) is connected to the voltage converter (53).

## Revendications

1. Installation pour l'alimentation d'au moins un consommateur électrique ou d'un accumulateur d'énergie en courant continu au moyen de plusieurs générateurs électriques placés au niveau de galets, en particulier de galets de roulement (33) ou des galets porteurs, d'une installation de téléphérique, **caractérisée en ce que** la sortie de chacun des générateurs (G, G1, G2, G3... Gn) est connectée à un convertisseur alternatif-continu (41, 42, 43... 4n) respectif, **en ce qu'**une sortie de chaque convertisseur alternatif-continu (41, 42, 43... 4n) est connectée par une ligne de commande bidirectionnelle commune (47) à une unité de commande commune (40), tous les convertisseurs alternatif-continu (41, 42, 43... 4n) étant commandés et régulés au moyen de l'unité de commande commune (40) de telle manière que des tensions au moins à peu près constantes soient présentes à leurs sorties, et les sorties de tous les convertisseurs alternatif-continu (41, 42, 43... 4n) étant connectées entre elles et connectées à au moins un consommateur ou à un accumulateur d'énergie.

2. Installation selon la revendication 1, **caractérisée en ce que** chacun des convertisseurs alternatif-continu (41, 42, 43... 4n) contient un redresseur (52) dont la sortie est connectée à un transformateur de tension continu-continu (53).

3. Installation selon la revendication 1 ou 2, **caractérisée en ce qu'**une sortie de chaque convertisseur alternatif-continu (41, 42, 43... 4n) est connectée à l'unité de commande (40) via une ligne de mesure (48).

4. Installation selon l'une des revendications 1 à 3, **caractérisée en ce que** l'unité de commande (40) est munie d'une ligne d'entrée resp. de sortie (40a).

5. Installation selon l'une des revendications 1 à 4, **caractérisée en ce qu'**un transducteur de tension et de fréquence (54) est connecté à la sortie des générateurs (G).

6. Installation selon l'une des revendications 2 et, le cas échéant, 3 à 5, **caractérisée en ce qu'**un transducteur d'intensité (55) et un transducteur de tension (56) sont respectivement connectés à la sortie des transformateurs de tension continu-continu (53).

7. Installation selon l'une des revendications 1 à 6, **caractérisée en ce qu'**une sonde de température (57) est connectée à chacun des générateurs (G, G1, G2, G3... Gn).

8. Installation selon les revendications 5 à 7, **caractérisée en ce que** les sorties du transducteur de tension et de fréquence (54), du transducteur d'intensité (55), du transducteur de tension (56) et des sondes de température (57) sont connectées à un circuit de commande (58).

9. Installation selon la revendication 8, **caractérisée en ce que** la sortie du circuit de commande (58) est connectée au transformateur de tension (53).
